# EUROPÄISCHE PATENTSCHRIFT

(11) **EP 1 242 494 B1**
(45) Veröffentlichungstag und Bekanntmachung des Hinweises auf die Patenterteilung: **12.10.2005**
(21) Anmeldenummer: 00981320.5
(22) Anmeldetag: 29.11.2000
(51) Int. Cl.: C08G 18/67, C08G 18/38, C09D 201/02

(54) **THERMISCH UND MIT AKTINISCHER STRAHLUNG HÄRTBARE STOFFGEMISCHE UND IHRE VERWENDUNG**
SUBSTANCE MIXTURE WHICH CAN BE CURED THERMALLY AND BY USING ACTINIC RADIATION, AND THE USE THEREOF
MELANGES DE SUBSTANCES DURCISSABLES PAR VOIE THERMIQUE ET PAR RAYONNEMENT ACTINIQUE ET LEUR UTILISATION

(30) Priorität: 22.12.1999 DE 19961926
(43) Veröffentlichungstag der Anmeldung: 25.09.2002
(73) Patentinhaber: BASF Coatings AG, 48165 Münster (DE)
(72) Erfinder: BAUMGART, Hubert, 48163 Münster (DE); MEISENBURG, Uwe, 47051 Duisburg (DE); RINK, Heinz-Peter, 48153 Münster (DE); HARRIS, Paul, J., W. Bloomfield, MI 48322 (US)
(74) Vertreter: Fitzner, Uwe
(86) Internationale Anmeldenummer: PCT/EP2000/011959
(87) Internationale Veröffentlichungsnummer: WO 2001/046285

(56) Entgegenhaltungen:
- EP-A- 0 618 244
- EP-A- 0 832 950

## Beschreibung

Die vorliegende Erfindung betrifft neue thermisch und mit aktinischer Strahlung härtbare Stoffgemische (Dual-Cure-Stoffgemische). Außerdem betrifft die vorliegende Erfindung die Verwendung der neuen Dual-Cure-Stoffgemische als Klebstoffe, Dichtungsmassen sowie als Beschichtungsstoffe in der Automobilerstlackierung, der Autoreparaturlackierung, der Möbellackierung und in der industriellen Lackierung, inklusive Coil Coating, Container Coating und die Beschichtung elektrotechnischer Bauteile. Außerdem betrifft die vorliegende Erfindung neue Verfahren zur Herstellung von Dual-Cure-Stoffgemischen. Des weiteren betrifft die vorliegende Erfindung neue Verfahren zur Herstellung von Klebschichten, Dichtungen und ein- oder mehrschichtigen Klarlackierungen oder farb- und/oder effektgebenden Lackierungen auf grundierten und ungrundierten Substraten unter Verwendung von Dual-Cure-Stoffgemischen. Nicht zuletzt betrifft die vorliegende Erfindung grundierte und ungrundierte Substrate, die neue Klebschichten, Dichtungen und/oder ein- oder mehrschichtige Klarlackierungen oder farb- und/oder effektgebende Lackierungen aufweisen.

Beschichtungen, insbesondere ein- oder mehrschichtige Klarlackierungen oder farb- und/oder effektgebende Lackierungen, Dichtungen und Klebschichten die über Urethangruppen dreidimensional vernetzt sind, weisen zahlreiche Vorteile wie eine vergleichsweise hohe Witterungsbeständigkeit, Chemikalienbeständigkeit und Kratzfestigkeit auf Hersteller und Anwender sind daher gleichermaßen bestrebt, Beschichtungsstoffe, Klebstoffe und Dichtungsmassen bereitzustellen, deren Bestandteile leicht herstellbar sind und die Polyurethan-Beschichtungen, -Klebschichten und -Dichtungen mit einem immer weiter verbesserten und optimierten Eigenschaftsprofil liefern.

Hierbei gewinnen Beschichtungsstoffe, Klebstoffe und Dichtungsmassen, die sowohl thermisch als auch mit aktinischer Strahlung härtbar sind (Dual-Cure-Beschichtungsstoffe, -Klebstoffe und -Dichtungsmassen), immer mehr an Interesse, weil sie zahlreiche Vorteile bieten.

So sind Dual-Cure-Beschichtungsstoffe zum einem besser für die Beschichtung thermisch empfindlicher Substrate geeignet als Beschichtungsstoffe, die nur thermisch härtbar sind, da bei ihnen eine möglicherweise unvollständige thermische Härtung bei niedrigen Temperaturen durch die Härtung mit aktinischer Strahlung kompensiert werden kann, so daß insgesamt Beschichtungen mit guten anwendungstechnischen Eigenschaften resultieren. Zum anderen sind Dual-Cure-Beschichtungsstoffe besser für die Beschichtung komplex geformter dreidimensionaler Substrate geeignet als Beschichtungsstoffe, die nur mit aktinischer Strahlung härtbar sind, da eine unvollständige Strahlenhärtung in den Schattenbereichen der Substrate durch die thermische Härtung kompensiert werden kann, so daß auch hier insgesamt Beschichtungen mit guten anwendungstechnischen Eigenschaften resultieren.

Dies gilt mutatis mutandis auch für die Dual-Cure-Klebstoffe und - Dichtungsmassen.

Dual-Cure-Beschichtungsstoffe, die Beschichtungen liefern, die in ihrem dreidimensionalen Netzwerk Urethangruppen enthalten, sind bekannt.

So wird in der europäischen Patentschrift EP-A-0 549 116 ein Dual-Cure-Beschichtungsstoff beschrieben, der einen Bestandteil mit freien Isocyanatgruppen und photopolymerisierbare olefinisch ungesättigte Doppelbindungen, einen Reaktivverdünner sowie gegebenenfalls einen Photoinitiator enthält. Schichten aus diesem bekannten Dual-Cure-Beschichtungsstoff werden zunächst mit aktinischer Strahlung, insbesondere UV-Licht, gehärtet. Hiernach werden die resultierenden Beschichtungen einer Härtung mit Feuchtigkeit unterworfen, wodurch sich das dreidimensionale Netzwerk durch die Bildung von Urethangruppe und Harnstoffgruppen aus den freien Isocyanatgruppen verdichtet. Nachteilig ist, daß nur Wasser und keine anderen isocyanatreaktiven Bestandteile, beispielsweise isocyanatreaktive Gruppen enthaltende Bindemittel oder Vernetzungsmittel, als Vernetzungspartner vorgesehen sind. Somit entfällt eine ganz wesentliche Möglichkeit, das Eigenschaftsprofil der Dual-Cure-Beschichtungsstoffe und der hieraus hergestellten Beschichtungen breit zu variieren. Außerdem ist das Ergebnis der Härtung mit Wasser in hohem Maße von der angewandten Luftfeuchtigkeit, der Temperatur, der Netzwerkdichte und anderen Parametern abhängig, so daß es schwer zu reproduzieren ist.

Aus der europäischen Patentanmeldung EP-A-0 928 800 ist demgegenüber ein Dual-Cure-Beschichtungsstoff bekannt, der ein Urethan(meth)acrylat mit freien Isocyanatgruppen und (Meth)Acryloylgruppen, einen Photoinitiator und eine isocyanatreaktive Verbindung, insbesondere ein Polyol oder Polyamin, enthält. Dieser Dual-Cure-Beschichtungsstoff bietet die Möglichkeit, die Eigenschaftsprofile von Beschichtungsstoff und von Beschichtung zu variieren und gezielt an unterschiedliche Verwendungszwecke anzupassen.

Der Nachteil beider bekannter Dual-Cure-Beschichtungsstoffe liegt darin, daß es sich um sogenannte Zweikomponentensysteme handelt, bei denen die Bestandteile, die freie Isocyanatgruppen enthalten, bis zur Applikation unter Ausschluß von Wasser bzw. getrennt von den Bestandteilen, die die isocyanatreaktiven Gruppen enthalten, gelagert werden müssen, um eine vorzeitige Vernetzung zu vermeiden. Dies erfordert aber einen höheren technischen und planerischen Aufwand bei der Lagerung, der Herstellung und der Applikation.

Dies gilt mutatis mutandis auch für die entsprechenden Dual-Cure-Klebstoffe und -Dichtungsmassen.

Dieser Aufwand muß zwar bei den aus den Patentschriften US-A-5,474,811, US-A-5,356,669, US-A-5,605,965, WO 94/10211, WO 94/10212, WO 94/10213, EP-A-0 594 068, EP-A-0 594 071 oder EP-A-0 594 142 bekannten Beschichtungsstoffen nicht getrieben werden. Diese enthalten mindestens ein Oligomer und/oder Polymer mit mindestens einer seitenständigen und/oder endständigen Carbamatgruppe der Formel:

**-O-(CO)-NH**_{**2**}

und mindestens ein Vernetzungsmittel mit mindestens zwei carbamatreaktiven Gruppen. Diese bekannten Beschichtungsmittel stellen somit Einkomponentensysteme dar und liefern Klarlacke, welche eine außerordentlich hohe Kratzfestigkeit und Etchbeständigkeit aufweisen. Allerdings können sie nicht zusätzlich mit aktinischer Strahlung gehärtet werden. Dies gilt auch für die entsprechenden Dual-Cure-Klebstoffe und-Dichtungsmassen.

Aufgabe der vorliegenden Erfindung ist es, neue Dual-Cure-Stoffgemische bereitzustellen, die die Nachteile des Standes der Technik nicht mehr länger aufweisen und Urethangruppen enthaltende Beschichtungen, Klebschichten und Dichtungen mit vorzüglichen anwendungstechnischen Eigenschaften liefern. Insbesondere sollen die neuen Dual-Cure-Stoffgemische Einkomponentensysteme darstellen, worin Bindemittel und Vernetzungsmittel nebeneinander vorliegen, ohne vorzeitig zu vernetzen. Dabei sollen sie nach der Applikation unter dem Einfluß von Wärme und aktinischer Strahlung bei vergleichsweise tiefen Temperaturen rasch vernetzen, so daß sie auch für die Beschichtung, das Verkleben und das Abdichten thermisch empfindlicher Substrate geeignet sind. Die resultierenden neuen Beschichtungen, Klebschichten und Dichtungen sollen eine vorzügliche Witterungsbeständigkeit, Chemikalienbeständigkeit, Härte, Flexibilität und Kratzfestigkeit aufweisen, so daß sie insbesondere für die Automobilerstlackierung, Autoreparaturlackierung, die Möbellackierung sowie die industrielle Lackierung, inklusive Coil Coating, Container Coating und die Beschichtungen elektrotechnischer Bauteile, sowie das Verkleben und das Abdichten der hierbei verwendeten Substrate in hohem Maße in Betracht kommen.

Demgemäß wurden die neuen thermisch und mit aktinischer Strahlung härtbaren Stoffgemische (Dual-Cure-Stoffgemische) gefunden, die
A) mindestens einen Bestandteil, der pro Molekül im statistischen Mittel mindestens eine primäre oder sekundäre Carbamatgruppe und mindestens eine mit aktinischer Strahlung aktivierbare Bindung aufweist und herstellbar ist, indem man
   1. nach einer ersten Variante
      1.1 in einem ersten Verfahrenschritt mindestens eine polyfunktionelle Verbindung mit mindestens zwei isocyanatreaktiven, säurereaktiven oder epoxidreaktiven funktionellen Gruppen mit jeweils mindestens einer Verbindung umsetzt, die eine Isocyanatgruppe, Säuregruppe oder Epoxidgruppen sowie mindestens eine mit aktinischer Strahlung aktivierbare Bindung aufweist, wonach man in einem zweiten Verfahrenschritt das resultierende Zwischenprodukt, das im statistischen Mittel noch mindestens eine freie isocyanatreaktive, säurereaktive oder epoxidreaktive funktionelle Gruppe aufweist, mit jeweils mindestens einer Verbindung umsetzt, durch die Carbamatgruppen eingeführt werden; oder
      1.2 in einem ersten Verfahrenschritt mindestens eine polyfunktionelle Verbindung mit mindestens zwei isocyanatreaktiven, säurereaktiven oder epoxidreaktiven funktionellen Gruppen mit jeweils mindestens einer Verbindung umsetzt, durch die Carbamatgruppen eingeführt werden, wonach man in einem zweiten Verfahrenschritt das resultierende Zwischenprodukt, das im statistischen Mittel noch mindestens eine freie isocyanatreaktive, säurereaktive oder epoxidreaktive funktionelle Gruppe aufweist, mit jeweils mindestens einer Verbindung umsetzt, die eine Isocyanatgruppe, Säuregruppe oder Epoxidgruppen sowie mindestens eine mit aktinischer Strahlung aktivierbare Bindung aufweist;
   2. nach einer zweiten Variante
      2.1 in einem ersten Verfahrenschritt mindestens ein Polyisocyanat, eine Polysäure oder ein Polyepoxid mit jeweils mindestens einer Verbindung, die mindestens eine mit aktinischer Strahlung aktivierbare Bindung sowie eine sowie eine isocyanatreaktive, säurereaktive oder epoxidreaktive funktionelle Gruppe aufweist, umsetzt, wonach man das resultierende Zwischenpodukt, das im statistischen Mittel noch mindestens eine Isocyanatgruppe, Säuregruppe oder Epoxidgruppe aufweist, in einem zweiten Verfahrensschritt mit jeweils mindestens einer Verbindung, die mindestens eine Carbamatgruppe oder mindestens eine in Carbamatgruppen umwandelbare funktionelle Gruppen sowie eine isocyanatreaktive, säurereaktive oder epoxidreaktive funktionelle Gruppe aufweist, umsetzt; oder
      2.2 in einem ersten Verfahrenschritt mindestens ein Polyisocyanat, eine Polycarbonsäure oder ein Polyepoxid mit jeweils mindestens einer Verbindung, die mindestens eine Carbamatgruppe oder mindestens eine in Carbamatgruppen umwandelbare funktionelle Gruppen sowie eine isocyanatreaktive, säurereaktive oder epoxidreaktive funktionelle Gruppe aufweist, umsetzt, wonach man das resultierende Zwischenpodukt, das im statistischen Mittel noch mindestens eine Isocyanatgruppe, Säuregruppe oder Epoxidgruppe aufweist, in einem zweiten Verfahrensschritt mit jeweils mindestens einer Verbindung, die mindestens eine mit aktinischer Strahlung aktivierbare Bindung sowie eine isocyanatreaktive, säurereaktive oder epoxidreaktive funktionelle Gruppe aufweist, umsetzt; oder
   3. nach einer dritten Variante mindestens ein Polyisocyanat, eine Polysäure oder ein Polyepoxid in einem Eintopfverfahren mit mindestens einer Verbindung, die mindestens eine Carbamatgruppe oder mindestens eine in Carbamatgruppen umwandelbare funktionelle Gruppen sowie eine isocyanatreaktive, säurereaktive oder epoxidreaktive funktionelle Gruppe aufweist, und mindestens einer Verbindung, die mindestens eine mit aktinischer Strahlung aktivierbare Bindung sowie eine isocyanatreaktive, säurereaktive oder epoxidreaktive funktionelle Gruppe aufweist, umsetzt; und
B) mindestens einen Bestandteil, der pro Molekül im statistischen Mittel mindestens eine carbamatreaktive funktionelle Gruppe sowie gegebenenfalls mindestens eine mit aktinischer Strahlung aktivierbare Bindung aufweist,
enthalten.

Im folgenden werden die neuen thermisch und mit aktinischer Strahlung härtbaren Stoffgemische als "erfindungsgemäße Dual-Cure-Stoffgemische" bezeichnet.

Weitere erfindungsgemäße Gegenstände gehen aus der Beschreibung hervor, wobei die vorstehend angegebene Art und Weise der Bezeichnung sinngemäß angewandt wird.

Im Hinblick auf den Stand der Technik war es überraschend und für den Fachmann nicht vorhersehbar, daß die Aufgabe, die der vorliegenden Erfindung zugrunde liegt, durch das erfindungsgemäße Dual-Cure-Stoffgemisch gelöst werden konnte. Insbesondere war es überraschend, daß das erfindungsgemäße Dual-Cure-Stoffgemisch in einfacher Weise hergestellt und ohne Probleme auch bei höherer Temperatur und/oder Luftfeuchtigkeit bis zu seiner Verwendung gelagert werden konnte. Insbesondere überraschte die breite Anwendbarkeit des erfindungsgemäßen Dual-Cure-Stoffgemischs. So war es hervorragend zur Herstellung von Klebstoffen, Dichtungsmassen und Beschichtungsstoffen oder als Klebstoff, Dichtungsmasse und Beschichtungsstoff geeignet. Die Klebstoffe, Dichtungsmassen und Beschichtungsstoffe lieferten auch auf thermisch empfindlichen grundierten und ungrundierten Substraten Klebschichten. Dichtungen und Beschichtungen mit vorzüglichen anwendungstechnischen Eigenschaften.

Im Rahmen der vorliegenden Erfindung ist unter aktinischer Strahlung elektromagnetische Strahlung wie sichtbares Licht, UV-Licht oder Röntgenstrahlung, insbesondere UV-Licht, oder Korpuskularstrahlung wie Elektronenstrahlung zu verstehen.

Außerdem werden im Rahmen der vorliegenden Erfindung unter Oligomeren Harze verstanden, die mindestens 2 bis 15 wiederkehrende Monomereinheiten in ihrem Molekül enthalten. Im Rahmen der vorliegenden Erfindung werden unter Polymeren Harze verstanden, die mindestens 10 wiederkehrende Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Der erste wesentliche Bestandteil des erfindungsgemäßen Dual-Cure-Stoffgemischs ist mindestens ein Bestandteil (A).

Der Bestandteil (A) ist je nach seinem Verwendungszweck niedermolekular, oligomer oder polymer. Wird er als Vernetzungsmittel oder Härter angewandt (vgl. hierzu Römpp Lexikon Lacke und Druckfarben, Georg Thieme Verlag, Stuttgart, New York, 1998, »Härtung«, Seiten 274 bis 276), ist er vorzugsweise niedermolekular oder oligomer. Wird er dagegen als Bindemittel angewandt (vgl. hierzu Römpp Lexikon Lacke und Druckfarben, Georg Thieme Verlag, Stuttgart, York, 1998, »Bindemittel«, Seiten 73 und 74) ist er vorzugsweise oligomer oder polymer.

Die Grundstrukturen der niedermolekularen Bestandteile (A) sind nicht kritisch, sondern können den unterschiedlichsten organischen Verbindungsklassen entstammen. Beispiele geeigneter Verbindungsklassen sind gegebenenfalls Heteroatome wie Sauerstoff, Stickstoff, Schwefel, Silizium oder Phosphor enthaltende Alkyl-, Cycloalkyl-, Alkylcycloalkyl-, Cycloalkylalkyl-, Aryl-, Alkylaryl-, Cycloalkylaryl- Arylalkyl- und/oder Arylcycloalkylverbindungen, die gegebenenfalls noch weitere Substituenten tragen, die indes bei der Herstellung der Bestandteile (A), ihrer Lagerung und/oder bei ihrer Anwendung nicht mit den Carbamatgruppen und mit den mit aktinischer Strahlung aktivierbaren Bindungen reagieren dürfen.

Die Grundstrukturen der oligomeren oder polymeren Bestandteilen (A) sind ebenfalls nicht kritisch und können den unterschiedlichsten Oligomer- und Polymerklassen entstammen. Beispiele geeigneter Oligomer- und Polymerklassen sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen. Hinsichtlich möglicherweise vorhandener Substituenten gilt das vorstehend Gesagte sinngemäß.

Beispiele gut geeigneter (Co)Polymerisate sind Poly(meth)acrylate und partiell verseifte Polyvinylester.

Beispiele gut geeigneter Polyadditionsharze und/oder Polykondensationsharze sind Polyester, Alkyde, Polyurethane, Polylactone, Polycarbonate, Polyether, Epoxidharz-Amin-Addukte, Polyharnstoffe, Polyamide oder Polyimide.

Der Bestandteil (A) enthält pro Molekül im statistischen Mittel mindestens eine primäre oder sekundäre, insbesondere primäre, Carbamatgruppe. Die Anzahl der Carbamatgruppen pro Molekül ist insbesondere bei den oligomeren und polymeren Bestandteilen (A) nach oben im wesentlichen nur durch die Molekülgröße begrenzt. Bei niedermolekularen Bestandteilen (A) richtet sie sich im wesentlichen nach der Funktionalität der zur Verfügung stehenden Ausgangsprodukte. Der Fachmann kann daher die jeweils vorteilhafte Anzahl der Carbamatgruppen leicht ermitteln.

Außerdem enthält der erfindungswesentliche Bestandteil (A) pro Molekül im statistischen Mittel mindestens eine mit aktinischer Strahlung aktivierbare Bindung. Die Anzahl der mit aktinischer Strahlung aktivierbaren Bindungen pro Molekül ist insbesondere bei den oligomeren und polymeren Bestandteilen (A) nach oben im wesentlichen nur durch die Molekülgröße begrenzt. Bei niedermolekularen Bestandteilen (A) richtet sie sich im wesentlichen nach der Funktionalität der zur Verfügung stehenden Ausgangsprodukte. Der Fachmann kann daher die vorteilhafte Anzahl der mit aktinischer Strahlung aktivierbaren Bindungen leicht ermitteln.

Beispiele geeigneter mit aktinischer Strahlung aktivierbarer Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff Silizium-Einzelbindungen oder -Doppelbindungen. Von diesen werden die Doppelbindungen, insbesondere die Kohlenstoff-Kohlenstoff-Doppelbindungen, bevorzugt angewandt.

Gut geeignete Kohlenstoff-Kohlenstoff-Doppelbindungen liegen beispielsweise in (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vor. Von diesen sind (Meth)Acrylatgruppen, insbesondere Acrylatgruppen, von besonderem Vorteil und werden deshalb erfindungsgemäß ganz besonders bevorzugt verwendet.

Der erfindungswesentliche Bestandteil (A) kann zwar in beliebiger Weise hergestellt werden. Erfindungsgemäß ist es indes von Vorteil, ihn nach den nachstehend beschriebenen drei Varianten zu synthetisieren.

In der ersten Variante geht die Herstellung des erfindungswesentlichen Bestandteils (A) von einer polyfunktionellen Verbindung, die im statistischen Mittel mindestens 2,0 isocyanatreaktive, säurereaktive oder epoxidreaktive funktionelle Gruppen im Molekül enthält, aus.

Beispiele geeigneter isocyanatreaktiver funktioneller Gruppen sind Thiol-, primäre und sekundäre Amino-, primäre Imino- oder Hydroxylgruppen von denen die primären und sekundären Aminogruppen und die Hydroxylgruppe von Vorteil und die Hydroxylgruppen von besonderem Vorteil sind und deshalb erfindungsgemäß besonders bevorzugt angewandt werden.

Beispiele geeigneter säurereaktiver funktioneller Gruppen sind die vorstehend genannten Gruppen sowie Epoxidgruppen, von denen die Epoxidgruppen von Vorteil sind und daher erfindungsgemäß bevorzugt angewandt werden.

Beispiele geeigneter epoxidreativer funktioneller Gruppen sind Säuregruppen wie Sulfonsäure-, Phosphonsäure-, Phosphorsäure- oder Carboxylgruppen, insbesondere Carboxylgruppen, oder primäre, sekundäre oder tertiäre, insbesondere primäre, Aminogruppen.

Bei den erfindungsgemäß bevorzugt verwendeten polyfunktionellen Verbindungen handelt es sich demnach um Polyole, Polyamine, Aminoalkohole, Polycarbonsäuren und Polyepoxide.

Die Polyole können niedermolekular, oligomer oder polymer sein.

Beispiele geeigneter niedermolekularer Polyole sind Diole wie Beispiele geeigneter Diole sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol, die stellungsisomeren Diethyloctandiole, 2-Butyl-2-ethylpropandiol-1,3, 2-Butyl-2-methylpropandiol-1, 3, 2-Phenyl-2-methylpropan-diol-1,3, 2-Propyl-2-ethylpropandiol-1,3, 2-Di-tert. -butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3, 2-Cyclohexyl-2-methylpropandiol-1,3, 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol oder 1,3-(2'-Hydroxypropyl)-benzol, Triole wie Trimethylolethan, Trimethylolpropan, Glycerin oder Trishydroxyethylisocyanurat; Tetrole wie Pentaerythrit oder Homopentaerythrit oder Zuckeralkohole wie Threit oder Erythrit; oder Pentite wie Arabit, Adonit oder Xylit; oder Hexite wie Sorbit, Mannit oder Dulcit.

Beispiele geeigneter oligomerer und polymerer Polyole sind die vorstehend beschriebenen Oligomere und Polymere, die Hydroxylgruppen enthalten.

Ergänzend wird auf Römpp Lexikon Lacke und Druckfarben, Georg Thieme Verlag, 1998, »Polyole«, Seiten 465 und 466, verwiesen.

Beispiele geeigneter Polyamine weisen mindestens zwei primäre und/oder sekundäre Aminogruppen auf. Polyamine sind im wesentlichen Alkylenpolyamine mit 1 bis 40 Kohlenstoffatomen, vorzugsweise etwa 2 bis 15 Kohlenstoffatomen. Sie können Substituenten tragen, die keine isocyanatreaktive, säurereaktive oder epoxidreaktive Wasserstoffatome haben. Beispiele sind Polyamine mit linearer oder verzweigter aliphatischer, cycloaliphatischer oder aromatischer Struktur und wenigstens zwei primären Aminogruppen.

Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamim Isophorondiamin oder 4,4'-Diaminodicyclohexylmethan. Bevorzugte Diamine sind Hydrazin, Alkyl- oder Cycloalkyldiamine wie Propylendiamin und 1-Amino-3-aminomethyl-3,5,5-trimethylcyclohexan.

Es können auch Polyamine eingesetzt werden, die mehr als zwei Aminogruppen im Molekül enthalten, wie Diethylentriamin, Triethylentetramin, Dipropylendiamin und Dibutylentriamin.

Ergänzend wird auf Römpp Lexikon Lacke und Druckfarben, Georg Thieme Verlag, 1998, »Polyamine«, Seite 458, verwiesen.

Beispiele geeigneter Aminoalkohole sind Ethanolamin, Diethanolamin oder Triethanolamin.

Beispiele geeigneter Polyepoxide sind die üblichen und bekannten niedermolekularen, oligomeren oder polymeren Epoxidharze mit mindestens zwei Epoxidgruppen im Molekül, wie sie durch Kondensation von Bisphenol A oder F mit Epichlorhydrin herstellbar sind, oder Polypropylenglykoldiglycidylether, Polybutylenglykoldiglycidylether, Polytetrahydrofurandiglycidylether, Triglycidylisocyanurat oder Pentaerythrittetraglycidylether. Ergänzend wird auf Römpp Lexikon Lacke und Druckfarben, Georg Thieme Verlag, 1998, »Epoxidharze«, Seiten 196 und 197, verwiesen.

Beispiele geeigneter Polysäuren sind niedermolekulare, oligomere oder polymere Säuren mit mindestens zwei Säuregruppen, vorzugsweise Sulfon-, Phosphon- und/oder Carbonsäuregruppen (Carboxylgruppen), insbesondere aber Carbonsäuregruppen, im Molekül, wie Phthalsäure, Isophthalsäure, Terephthalsäure, Phthalsäure-, Isophthalsäure- oder Terephthalsäuremonosulfonat, Halogenphthalsäuren wie Tetrachlor- bzw. Tetrabromphthalsäure, Oxalsäure, Malonsäure, Bernsteinsäure, Glutarsäure, Adipinsäure, Pimelinsäure, Korksäure, Azelainsäure, Sebacinsäure, Undecandicarbonsäure, Dodecandicarbonsäure, Maleinsäure, Fumarsäure oder Itaconsäure von denen Adipinsäure, Glutarsäure, Azelainsäure, Sebacinsäure, 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1;3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure, Trimellithsäure, Hemimellithsäure, Benzoltetracarbonsäure, Cyclohexantetracarbonsäure oder oligomere oder polymere Polyacrylsäure.

Die polyfunktionellen Verbindungen, insbesondere die Polyole, werden mit mindestens einer Verbindung umgesetzt, die mindestens eine, insbesondere eine, der vorstehend beschriebenen mit aktinischer Strahlung aktivierbaren Bindungen sowie eine Isocyanatgruppe, eine Säuregruppe oder eine Epoxidgruppe enthält. Hierbei werden die Verbindungen in einem Molverhältnis miteinander umgesetzt, daß das resultierende Zwischenpodukt im statistischen Mittel noch immer mindestens eine isocyanatreaktive, säurereaktive oder epoxidreaktive funktionelle Gruppe enthält.

Beispiele geeigneter Verbindungen, die für die Umsetzung mit den polyfunktionellen Verbindungen in Betracht kommen, sind eine Säuregruppe pro Molekül tragende olefinisch ungesättigte Monomere, insbesondere ethylenisch ungesättigte Carbon-, Sulfon- oder Phosphonsäuren mit bis zu 15 Kohlenstoffatomen im Molekül, insbesondere Acrylsäure, Methacrylsäure, Ethacrylsäure, Crotonsäure, Maleinsäuremono(meth)acryloyloxyethylester, Bernsteinsäuremono(meth)acryloyloxyethylester und Phthalsäuremono(meth)acryloyloxyethylester. Von diesen weist die Acrylsäure ganz besondere Vorteile auf und wird deshalb erfindungsgemäß ganz besonders bevorzugt verwendet.

Weitere Beispiele geeigneter Verbindungen, die für die Umsetzung mit den polyfunktionellen Verbindungen in Betracht kommen, sind eine Isocyanatgruppe im Molekül enthaltende Monomere wie
- Vinylisocyanat, Methacryloylisocyanat oder 1-(1-Isocyanato-1-methylethyl)-3-(1-methylethenyl)-benzol (TMI® von der Firma CYTEC) oder
- Addukte von Diisocyanaten wie Isophorondüsocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocydopentan, 1,3-Diisocyanatocyclopentan, 1,2-Diisocyanatocyclohexan, 1,3-Diisocyanatocyclohexan, 1,4-Diisocyanatocyclohexan, Dicyclohexylmethan-2,4'-düsocyanat, Trimethylendiisocyanat, Tetramethylendiisocyanat, Pentamethylendiisocyanat, Hexamethylendiisocyanat, Ethylethylendiisocyanat, Trimethylhexandüsocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften DO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentschriften DE-A-44 14 032, GB-A-1220717, DE-A-16 18 795 oder DE-A-17 93 785 beschrieben wird; Toluylendiisocyanat, Xylylendiisocyanat, Bisphenylendiisocyanat, Naphthylendiisocyanat oder Diphenylmethandiisocyanat mit einer Verbindung mit einer isocyanatreaktiven funktionellen Gruppe und mindestens einer der vorstehend beschriebenen mit aktinischer Strahlung aktivierbaren Bindungen wie
- 2-Hydroxyethyl-, 2-Hydroxypropyl-, 3-Hydroxypropyl-, 3-Hydroxybutyl-, 4-Hydroxybutyl-, Bis(hydroxymethyl)cyclohexan-, Neopentylglykol-, Diethylenglykol-, Dipropylenglykol-, Dibutylenglykol-, Triethylenglykolacrylat, -methacrylat, - ethacrylat, -crotonat, -cinnamat, -vinylether, -allylether, - dicyclopentadienylether, -norbornenylether, -isoprenylether, - isopropenylether oder -butenylether;
- Trimethylolpropandi-, Glycerindi-, Trimethylolethandi-, Pentaerythrittri- oder Homopentaerythrittriacrylat, -methacrylat, - ethacrylat, -crotonat, -cinnamat, -vinylether, -allylether, - dicyclopentadienylether, -norbornenylether, -isoprenylether, - isopropenylether oder -butenylether; oder
- Umsetzungsprodukte aus cyclischen Estern, wie z.B. epsilon-Caprolacton, und den vorstehend beschriebenen hydroxylgruppenhaltige Monomeren, oder
- 2-Aminoethyl(meth)acrylat und/oder 3-Aminopropyl(meth)acrylat;
im Molverhältnis von 1 : 1.

Noch weitere Beispiele geeigneter Verbindungen, die für die Umsetzung mit den polyfunktionellen Verbindungen in Betracht kommen, sind eine Epoxidgruppe im Molekül enthaltende Monomere wie Glycidylester der Acrylsäure, Methacrylsäure, Ethacrylsäure, Crotonsäure, Maleinsäure, Fumarsäure und/oder Itaconsäure.

Der Fachmann kann die geeigneten Kombinationen von polyfunktioneller Verbindung und hiermit reaktiver Verbindungen leicht anhand seines allgemeinen Fachwissens angeben.

Die Umsetzung der polyfunktionellen Verbindungen mit den hiermit reaktiven Verbindungen erfolgt in einem Molverhältnis, daß das resultierende Zwischenprodukt noch immer mindestens eine Isocyanat-, Säure- oder Epoxidgruppe aufweist.

Das resultierende Zwischenpodukt wird in einem zweiten Verfahrensschritt mit mindestens einer Verbindung umgesetzt, durch die Carbamatgruppen eingeführt werden, wodurch der erfindungsgemäß zu verwendende Bestandteil (A) resultiert. Hierbei wird ein Molverhältnis der Reaktionspartner angewandt, daß der Bestandteil (A) keine Isocyanat-, Säure- oder Epoxidgruppen mehr aufweist.

Beispiele geeigneter Verbindungen dieser Art sind Harnstoff oder Aryl- oder Alkylurethane, die auch als Carbamate bezeichnet werden, wie Phenylurethan, Methylurethan oder Butylurethan.

Weitere Beispiele geeigneter Verbindungen sind Phosgen und Ammoniak, durch die bekanntermaßen Carbamatgruppen insbesondere in Polyole eingeführt werden können.

Nach einer zweiten Alternative der ersten Variante können die polyfunktionellen Verbindungen im ersten Verfahrensschritt mit Verbindungen, durch die Carbamatgruppen eingeführt werden, und im zweiten Verfahrensschritt mit Verbindungen, die mindestens eine mit aktinischer Strahlung aktivierbare Bindung und eine Isocyanatgruppe, Säuregruppe oder Epoxidgruppe enthalten, umgesetzt werden.

Nach der zweiten Variante werden die erfindungswesentlichen Bestandteile (A) ausgehend von einem Polyisocyanat, einem Polyepoxid oder einer Polysäure, insbesondere einer Polycarbonäure, hergestellt.

Das Polyisocyanat enthält im statistischen Mitteln mindestens 2,0, bevorzugt mehr als 2,0 und insbesondere mehr als 3,0 Isocyanatgruppen pro Molekül. Die Anzahl der Isocyanatgruppen ist nach oben im Grunde nicht begrenzt; erfindungsgemäß ist es indes von Vorteil, wenn die Anzahl 15, vorzugsweise 12, besonders bevorzugt 10, ganz besonders bevorzugt 8,0 und insbesondere 6,0 nicht überschreitet.

Beispiele geeigneter Polyisocyanate sind isocyanatgruppenhaltige Polyurethanpräpolymere, die durch Reaktion von Polyolen mit einem Überschuß an den vorstehend beschriebenen Diisocyanaten hergestellt werden können und bevorzugt niederviskos sind. Es können auch Isocyanurat-, Biuret-, Allophanat-, Iminooxadiazindion-, Urethan-, Harnstoff- Carbodiimid und/oder Uretdiongruppen aufweisende Polyisocyanate verwendet werden, die in üblicher und bekannter Weise aus den vorstehend beschriebenen Diisocyanaten hergestellt werden. Beispiel geeigneter Herstellungsverfahren und Polyisocyanate sind beispielsweise aus dem Patentschriften CA-A-2,163,591, US-A-4,419,513, US-A-4,454,317, EP-A-0 646 608, US-A-4,801,675, EP-A-0 183 976, DE-A-40 15 155, EP-A-0 303 150, EP-A- 0 496 208, EP-A-0 524 500, EP-A-0 566 037, US-A-5,258,482, US-A-5,290,902, EP-A-0 649 806, DE-A-42 29 183 oder EP-A-0 531 820 bekannt.

Beispiele geeigneter Polysäuren sind die vorstehend beschriebenen.

Beispiele geeigneter Polyepoxide sind die vorstehend beschriebenen.

Nach der ersten Alternative der zweiten Variante wird das Polyisocyanat, das Polyepoxid oder die Polysäure in einem ersten Verfahrensschritt mit mindestens einer Verbindung, die mindestens eine der vorstehend beschriebenen mit aktinischer Strahlung aktivierbaren Bindungen und eine der vorstehend beschriebenen isocyanatreaktiven, säurereaktiven oder epoxidreaktiven funktionellen Gruppen enthält, in einem Molverhältnis umgesetzt, daß das resultierende Zwischenpodukt im statistischen Mittel noch immer mindestens eine, Isocyanatgruppe, Säuregruppe oder Epoxidgruppe enthält.

Nach der zweiten Alternative der zweiten Variante wird das Polyisocyanat, die Polysäure oder das Polyepoxid in dem ersten Verfahrensschritt mit mindestens einer Verbindung, die mindestens eine Carbamatgruppe oder in eine Carbamatgruppe umwandelbare funktionelle Gruppe sowie eine der vorstehend beschriebenen isocyanatreaktiven, säurereaktiven oder epoxidreaktiven funktionellen Gruppen enthält, in einem Molverhältnis umgesetzt, daß das resultierende Zwischenpodukt im statistischen Mittel noch immer mindestens eine Isocyanat-, Säure- oder Epoxidgruppe enthält.

Das Zwischenpodukt der ersten Alternative der zweiten Variante wird im zweiten Verfahrensschritt mit mindestens einer mindestens eine Carbamatgruppe oder in Carbamatgruppen umwandelbare funktionelle Gruppe enthaltenden Verbindungen in einem Molverhältnis umgesetzt, daß der hierbei resultierende Bestandteil (A) keine Isocyanat-, Säure- oder Epoxidgruppen mehr enthält.

Beispiele geeigneter Verbindungen mit mindestens einer Carbamatgruppe sind Hydroxyethylcarbamat oder Hydroxypropylcarbamat. Ein Beispiel für eine geeignete in eine Carbamatgruppe umwandelbare funktionelle Gruppe ist die cyclische Ethylencarbonatgruppe, die mit Ammoniak in eine primäre Carbamatgruppe umgewandelt werden kann. Die Ethylencarbonatgruppe selbst kann durch die Umsetzung des Polyisocyanats, der Polysäure oder des Polyepoxids mit beispielsweise Glycidol und anschließender Umsetzung der Epoxidgruppen mit Kohlendioxid hergestellt werden. Im Falle der Polyepoxide ist darauf zu achten, daß bei der Umsetzung mit Kohlendioxid keine an den Grundkörper gebundene Epoxidgruppen mehr vorhanden sind.

Das Zwischenpodukt der zweiten Alternative der zweiten Variante wird im zweiten Verfahrensschritt mit mindestens einer der vorstehend beschriebenen Verbindungen, die mindestens eine der vorstehend beschriebenen mit aktinischer Strahlung aktivierbaren Bindungen und eine der vorstehend beschriebenen isocyanatreaktiven, säurereaktiven oder epoxidreaktiven funktionellen Gruppen enthalten, in einem Molverhältnis umgesetzt, daß der resultierende erfindungswesentliche Bestandteil (A) keine Isocyanat-, Säure- oder Epoxidgruppen mehr aufweist.

In der dritten Variante der Herstellung des erfindungswesentlichen Bestandteils (A) werden die Polyisocyanate, die Polysäuren oder die Polyepoxide in einem Eintopfverfahren mit den vorstehend beschriebenen Verbindungen, die mindestens eine mit aktinischer Strahlung aktivierbare Bindung und eine isocyanatreaktive, säurereaktive oder epoxidreaktive Gruppe enthalten, und den vorstehend beschriebenen Verbindungen, die mindestens eine Carbamatgruppe oder in eine Carbamatgruppe umwandelbare funktionelle Gruppe und eine isocyanatreaktive, säurereaktive oder epoxidreaktive funktionelle Gruppe enthalten, statistisch umgesetzt. Hierbei wird ein Molverhältnis angewandt, daß der resultierende erfindungswesentliche Bestandteil (A) keine Isocyanat, Säure- oder Epoxidgruppen mehr enthält.

Erfindungsgemäß können die erste, zweite und dritte Variante der Herstellung des erfindungswesentlichen Bestandteils (A) in der Weise variiert werden, daß bei den Varianten 1 bis 3 die Molverhältnisse der Reaktionspartner so gewählt werden, daß der jeweils resultierende Bestandteil (A) noch mindestens eine isocyanatreaktive, säurereaktive oder epoxidreaktive funktionelle Gruppe (Variante 1) oder mindestens eine Isocyanat-, Säure- oder Epoxidgruppe (Varianten 2 und 3) enthält, die mit mindestes einer Verbindung umgesetzt wird, die eine Isocyanat-, Säure- oder Epoxidgruppe (Variante 1) oder eine isocyanatreaktive, säurereaktive oder epoxidreaktive funktionelle Gruppe (Varianten 2 und 3) sowie mindestens eine von Carbamatgruppen, von in Carbamatgruppen umwandelbare Gruppen und von mit aktinischer Strahlung aktivierbaren Bindungen verschiedene funktionelle Gruppe (Varianten 1 bis 3) enthält. In dieser Weise kann das Eigenschaftsprofil des erfindungswesentlichen Bestandteils (A) in vorteilhafter Weise beispielsweise durch den Einbau hydrophiler oder hydrophober Gruppen breit variiert werden. Beispiele geeigneter Verbindungen, durch die hydrophobe Gruppen eingeführt werden können, sind Fettalkohole wie Stearylalkohol. Beispiele geeigneter Verbindungen, durch die hydrophile Gruppen eingeführt werden können, sind Poly(ethylenoxid)monoalkylether. Es können indes auch die nachstehend beschriebenen Photoinitiatoren (C) und andere Hilfsstoff (C) in dieser Weise chemisch an die Bestandteile (A) gebunden werden.

Methodisch gesehen weisen die vorstehend beschriebenen Verfahren zur Herstellung des erfindungswesentlichen Bestandteils (A) keine Besonderheiten auf, sondern es werden die von der organischen Chemie und der Polymerchemie her bekannten Verfahren und Vorrichtungen verwendet, wobei die für die Handhabung von Phosgen und Polyisocyanaten vorgeschriebenen Vorsichtsmaßnahmen beachtet werden.

Der Anteil des erfindungswesentlichen Bestandteils (A) an dem erfindungsgemäßen Dual-Cure-Stoffgemisch kann außerordentlich breit variieren und richtet sich vor allem nach dem Verwendungszweck und nach den sonstigen vorhandenen Bestandteilen, insbesondere dem Bestandteil (B). Vorzugsweise liegt der Anteil von (A) bei 1,0 bis 99, bevorzugt 2,0 bis 98, besonders bevorzugt 3,0 bis 97, ganz besonders bevorzugt 4,0 bis 96 und insbesondere 5,0 bis 95 Gew.-%, jeweils bezogen auf die Gesamtmenge an (A) und (B).

Der weitere wesentliche Bestandteil des erfindungsgemäßen Dual-Cure-Stoffgemischs ist mindestens ein Bestandteil (B), der pro Molekül im statistischen Mittel mindestens eine carbamatreaktive funktionelle Gruppe sowie gegebenenfalls mindestens eine der vorstehend beschriebenen mit aktinischer Strahlung aktivierbaren Bindungen aufweist.

Beispiele geeigneter carbamatreaktiver funktioneller Gruppen sind N-Methylol- oder N-Methylolethergruppen.

Der Bestandteil (B) ist je nach seinem Verwendungszweck niedermolekular, oligomer oder polymer. Wird er als Vernetzungsmittel oder Härter angewandt (vgl. hierzu Römpp Lexikon Lacke und Druckfarben, Georg Thieme Verlag, Stuttgart, New York, 1998, »Härtung«, Seiten 274 bis 276) angewandt, ist er vorzugsweise niedermolekular oder oligomer. Wird er dagegen als Bindemittel angewandt (vgl. hierzu Römpp Lexikon Lacke und Druckfarben, Georg Thieme Verlag, Stuttgart, York, 1998, »Bindemittel«, Seiten 73 und 74) ist er vorzugsweise oligomer oder polymer. Hinsichtlich der Grundstrukturen gilt das vorstehend bei dem Bestandteil (A) Gesagte sinngemäß.

Vorzugsweise ist der Bestandteil (B) ein Aminoplastharz.

Beispiele geeigneter Aminoplastharze sind üblich und bekannt und zahlreiche Vertreter sind im Handel erhältlich.

Beispiele gut geeigneter Aminoplastharze sind Melaminharze, Guanaminharze oder Harnstoffharze. Hierbei kann jedes für transparente Decklacke oder Klarlacke geeignete Aminoplastharz oder eine Mischung aus solchen Aminoplastharzen verwendet werden. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff, oder auf das Buch "Paints, Coatings and Solvents", second completely revised edition, Edit. D. Stoye und W. Freitag, Wiley-VCH, Weinheim, New York, 1998, Seiten 80 ff, verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Der Anteil des erfindungswesentlichen Bestandteils (B) an dem erfindungsgemäßen Dual-Cure-Stoffgemisch kann außerordentlich breit variieren und richtet sich vor allem nach dem Verwendungszweck und nach den sonstigen vorhandenen Bestandteilen, insbesondere dem Bestandteil (B). Vorzugsweise liegt der Anteil von (B) bei 1,0 bis 99, bevorzugt 2,0 bis 98, besonders bevorzugt 3,0 bis 97, ganz besonders bevorzugt 4,0 bis 96 und insbesondere 5,0 bis 95 Gew.-%, jeweils bezogen auf die Gesamtmenge an (A) und (B).

In dem erfindungsgemäßen Dual-Cure-Stoffgemisch können die vorstehend beschriebenen erfindungswesentlichen Bestandteile (A) und (B) in unterschiedlicher Weise miteinander kombiniert werden.

Bei einer ersten bevorzugten Kombination handelt es sich bei den Bestandteilen (A) um oligomere und/oder polymere Verbindungen und bei den Bestandteilen (B) um niedermolekulare und/oder oligomere Verbindungen.

Bei einer zweiten bevorzugten Kombination handelt es sich bei den Bestandteilen (A) um niedermolekulare und/oder oligomere Verbindungen und bei den Bestandteilen (B) um oligomere und/oder polymere Verbindungen.

Bei einer dritten bevorzugten Kombination handelt es sich bei den Bestandteilen (A) um niedermolekulare und/oder oligomere Verbindungen und bei den Bestandteilen (B) um niedermolekulare und/oder oligomere Verbindungen. Diese Kombination wird insbesondere dann angewandt, wenn das erfindungsgemäße Dual-Cure-Stoffgemisch einen besonders hohen Festkörpergehalt haben soll.

Bei der vierten bevorzugten Kombination handelt es sich sowohl bei den Bestandteilen (A) als auch bei den Bestandteilen (B) um oligomere und/oder polymere Verbindungen. Diese Kombination wird insbesondere bei emissionsfreien flüssigen oder festen 100%-Systemen angewandt.

Ansonsten richtet sich die Kombination nach dem Verwendungszweck und dem Aggregatzustand des erfindungsgemäßen Dual-Cure-Stoffgemischs und kann daher vom Fachmann aufgrund seines allgemeinen Fachwissens gegebenenfalls unter Zuhilfenahme einfacher orientierender Vorversuche ausgewählt werden.

So kann das erfindungsgemäße Dual-Cure-Stoffgemisch als ein erfindungsgemäßer Dual-Cure-Klebstoff, eine erfindungsgemäße Dual-Cure-Dichtungsmasse oder ein erfindungsgemäßer Dual-Cure-Beschichtungsstoff dienen. Des weiteren kann es der Herstellung dieses Klebstoffs, dieser Dichtungsmasse oder dieses Beschichtungsstoffs dienen. Hierbei können die erfindungsgemäßen Dual-Cure-Klebstoffe, -Dichtungsmassen und - Beschichtungsstoffe flüssige lösemittelhaltige Systeme (konventionelle Systeme), flüssige lösemittelfreie Systeme (100%-Systeme) oder lösemittelfreie feste Systeme sein. Im Falle von Beschichtungsstoffen werden die lösemittelfreien festen Systeme auch als Pulverlacke bezeichnet. Diese können auch in Wasser dispergiert sein. Dispersionen dieser Art werden von der Fachwelt auch als Pulverslurry-Lacke bezeichnet.

Besondere Vorteile weist das erfindungsgemäße Dual-Cure-Stoffgemisch bei seiner Verwendung als erfindungsgemäßer Dual-Cure-Beschichtungsstoff auf Hierbei kann er als Füller, Unidecklack, Basislack oder Klarlack, insbesondere aber als Klarlack, verwendet werden.

Das erfindungsgemäße Dual-Cure-Stoffgemisch kann mindestens einen Zusatzstoff (C) enthalten. Die Auswahl richtet sich vor allem nach dem Verwendungszweck des erfindungsgemäßen Dual-Cure-Stoffgemischs.

Vorzugsweise sind diese Zusatzstoffe (C) unter den Verarbeitungs- und Applikationsbedingungen des erfindungsgemäßen Dual-Cure-Stoffgemischs nicht flüchtig.

Wird der erfindungsgemäße Dual-Cure-Beschichtungsstoff als Füller, Decklack oder Basislack verwendet, enthält er als Zusatzstoffe (C) farb- und/oder effektgebende Pigmente (C) in üblichen und bekannten Mengen. Die Pigmente (C) können aus anorganischen oder organischen Verbindungen bestehen und können effekt- und/oder farbgebend sein. Der erfindungsgemäße Dual-Cure-Beschichtungsstoff gewährleistet daher aufgrund dieser Vielzahl geeigneter Pigmente (C) eine universelle Einsatzbreite der Dual-Cure-Beschichtungsstoffe und ermöglicht die Realisierung einer Vielzahl von Farbtönen und optischer Effekte.

Als Effektpigmente (C) können Metallplättchenpigmente wie handelsübliche Aluminiumbronzen, gemäß DE-A-36 36 183 chromatierte Aluminiumbronzen, und handelsübliche Edelstahlbronzen sowie nichtmetallische Effektpigmente, wie zum Beispiel Perlglanz- bzw. Interferenzpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente (C) sind Titandioxid, Eisenoxide, Sicotransgelb und Ruß. Beispiele für geeignete organische farbgebende Pigmente (C) sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »Thioindigo-Pigmente« und Seite 567 »Titandioxid-Pigmente« verwiesen.

Desweiteren kann der erfindungsgemäße Dual-Cure-Beschichtungsstoff, insbesondere als Füller, organische und anorganische Füllstoffe (C) in üblichen und bekannten, wirksamen Mengen enthalten. Beispiele für geeignete Füllstoffe (C) sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl. Ergänzend wird auf Römpp Lexikon Lacke und Druckfarben, Georg Thieme Verlag, 1998, Seiten 250 ff., »Füllstoffe«, verwiesen.

Diese Pigmente und Füllstoffe (C) können auch über Pigmentpasten in die erfindungsgemäßen Dual-Cure-Beschichtungsstoffe eingearbeitet werden.

Die vorstehend beschriebenen Pigmente und Füllstofffe (C) entfallen, wenn die erfindungsgemäßen Dual-Cure-Beschichtungsstoffe in ihrem ganz besonders bevorzugten Verwendungszweck als Klarlacke verwendet werden.

Beispiele geeigneter Zusatzstoffe (C), welche sowohl in den erfindungsgemäßen Klarlacken, Füllern, Basislacken und Decklacken vorhanden sein können, sind
- übliche und bekannte oligomere und polymere Bindemittel wie thermisch härtbare lineare und/oder verzweigte und/oder blockartig, kammartig und/oder statistisch aufgebaute Poly(meth)acrylate oder Acrylatcopolymerisate, Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe;
- übliche und bekannte thermisch und/oder mit aktinischer Strahlung härtbare Reaktiverdünner wie stellungsisomere Diethyloctandiole oder Hydroxylgruppen enthaltende hyperverzweigte Verbindungen oder Dendrimere, di- oder höherfunktionelle (Meth)Acrylate wie Trimethylolpropan-tri(meth)acrylat, oder (Meth)Acrylatgruppen enthaltende Polyisocyanate;
- Vernetzungsmittel wie Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten, wie sie der europäischen Patentschrift EP-A-0 596 460 beschrieben werden;
- niedrig siedende und/oder hochsiedende organische Lösemittel ("lange Lösemittel");
- UV-Absorber;
- Lichtschutzmittel wie HALS-Verbindungen, Benztriazole oder Oxalanilide;
- Radikalfänger;
- Photoinitiatoren wie solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon Lacke und Druckfarben, Georg Thieme Verlag Stuttgart, 1998, Seiten 444 bis 446, verwiesen), insbeondere Benzophenone, Benzoine oder Benzoinether oder Phosphinoxide;
- thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether;
- Katalysatoren für die Vernetzung wie Dibutylzinndilaurat, Lithiumdecanoat oder Zinkoctoat oder starke Säuren wie Sulfonsäuren, die gegebenenfalls mit Aminen blockiert sind;
- Entlüftungsmittel, wie Diazadicycloundecan;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkausatze oder Ammoniumsalze von Alkancarbonsäuren, Alkansulfonsäuren, und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- transparente Füllstoffe auf der Basis von Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen;
- Sag control agents wie Harnstoffe, modifizierte Harnstoffe und/oder Kieselsäuren, wie sie beispielsweise in den Literaturstellen EP-A-192 304, DE-A-23 59 923, DE-A-18 05 693, WO 94/22968, DE-C-27 51 761, WO 97/12945 oder "farbe + lack", 11/1992, Seiten 829 ff., beschrieben werden;
- rheologiesteuernde Additive, wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- Flammschutzmittel und/oder
- Mattierungsmittel wie Magnesiumstearat.

Weitere Beispiele geeigneter Zusatzstoffe (C) werden in dem Lehrbuch »Lackadditive« von Johan Bieleman, Wiley-VCH, Weinheim, New York, 1998, beschrieben.

Diese Zusatzstoffe (C) werden den erfindungsgemäßen Beschichtungsstoffen in üblichen und bekannten, wirksamen Mengen zugesetzt, welche je nach Zusatzstoff (C) bei 0,001 bis 500 Gewichtsteilen pro 100 Gewichtsteilen an den erfindungswesentlichen Bestandteilen (A) und (B) liegen.

Die vorstehend beschriebenen Zusatzstoffe (C) können auch in den erfindungsgemäßen Dual-Cure-Kletistoffen und -Dichtungsmassen vorhanden sein, sofern sie sich für diese Verwendungszwecke eignen, was der Fachmann anhand seines allgemeinen Fachwissens leicht feststellen kann.

Die Herstellung der erfindungsgemäßen Dual-Cure-Stoffgemische weist keine Besonderheiten auf, sondern erfolgt in üblicher und bekannter Weise durch Vermischen der vorstehend beschriebenen Bestandteile in geeigneten Mischaggregaten wie Rührkessel, Dissolver, Rührwerksmühlen oder Extruder nach den für die Herstellung der jeweiligen erfindungsgemäße Dual-Cure-Stoffgemische geeigneten Verfahren.

Die erfindungsgemäßen Dual-Cure-Klebstoffe dienen der Herstellung der erfindungsgemäßen Klebschichten auf grundierten und ungrundierten Substraten.

Die erfindungsgemäßen Dual-Cure-Dichtungsmassen Dienen der Herstellung der erfindungsgemäßen Dichtungen auf und/oder in grundierten und ungrundierten Substraten.

Die erfindungsgemäßen Dual-Cure-Beschichtungsstoffe dienen der Herstellung ein- oder mehrschichtiger Klarlackierungen und/oder farb- und/oder effektgebender Lackierungen auf grundierten und ungrundierten Substraten. Die erfindungsgemäßen Dual-Cure-Stoffgemische erweisen sich bei dieser Verwendung als besonders vorteilhaft. Ganz besondere Vorteile resultieren bei ihrer Verwendung zur Herstellung von Klarlackierungen, insbesondere im Rahmen des sogenannten Naß-in-naß-Verfahrens, bei dem ein Basislack, insbesondere ein Wasserbasislack, auf das grundierte oder ungrundierte Substrat appliziert und getrocknet, indes nicht gehärtet wird, wonach man auf die Basislackschicht einen Klarlack appliziert und die resultierende Klarlackschicht gemeinsam mit der Basislackschicht thermisch und mit aktinischer Strahlung härtet.

Als Substrate kommen alle zu lackierenden Oberflächen, die durch eine Härtung der hierauf befindlichen Schichten unter der kombinierten Anwendung von Hitze und aktinischer Strahlung nicht geschädigt werden, in Betracht; das sind z. B. die Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien. Demnach sind die erfindungsgemäßen Lackierungen, Klebschichten oder Dichtung auch für Anwendungen außerhalb der Automobilerstlackierung und der Autoreparaturlackierung geeignet. Hierbei kommen sie insbesondere für die Lackierung, das Verkleben und/oder das Abdichten von Möbeln und für die industrielle Anwendung, inklusive Coil Coating, Container Coating und die Imprägnierung oder Beschichtung elektrotechnischer Bauteile, in Betracht. Im Rahmen der industriellen Anwendungen eignen sie sich für die Lackierung, das Verkleben und/oder das Abdichten praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert, geklebt oder abgedichtet werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Applikation des erfindungsgemäßen Dual-Cure-Stoffgemischs, insbesondere des erfindungsgemäßen Dual-Cure-Beschichtungsstoffs, kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air- Heißspritzen. Die Applikationen kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Beschichtungsstoffs und seines gegebenenfalls wiederaufzubereitenden Overspray eintreten. So kann das Heißspritzen so ausgestaltet sein, daß der Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Beschichtungsstoff selbst, betrieben wird.

Bevorzugt wird die Applikation bei Beleuchtung mit sichtbarem Licht einer Wellenlänge von über 550 nm oder unter Lichtausschluß durchgeführt. Hierdurch werden eine stoffliche Änderung oder Schädigung des Beschichtungsstoffs und des Overspray vermieden.

Im allgmeinen werden die Füllerlackschicht, Decklackschicht, Basislackschicht und Klarlackschicht in einer Naßschichtdicke appliziert, daß nach ihrer Aushärtung Schichten mit der für ihre Funktionen notwendigen und vorteilhaften Schichtdicken resultieren. Im Falle der Füllerschicht liegt diese Schichtdicke bei 10 bis 150, vorzugsweise 15 bis 120, besonders bevorzugt 20 bis 100 und insbesondere 25 bis 90 µm, im Falle der Decklackierung liegt sie bei 5 bis 90, vorzugsweise 10 bis 80, besonders bevorzugt 15 bis 60 und insbesondere 20 bis 50 µm, im Falle der Basislackierung liegt sie bei 5 bis 50, vorzugsweise 10 bis 40, besonders bevorzugt 12 bis 30 und insbesondere 15 bis 25 µm, und im Falle der Klarlackierungen liegt sie bei 10 bis 100, vorzugsweise 15 bis 80, besonders bevorzugt 20 bis 70 und insbesondere 25 bis 60 µm.

Bevorzugt wird die Applikation bei Beleuchtung mit sichtbarem Licht einer Wellenlänge von über 550 nm oder unter Lichtausschluß durchgeführt. Hierdurch werden eine stoffliche Änderung oder Schädigung des Beschichtungsstoffs I und des Overspray vermieden.

Die Aushärtung kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der applizierten Schichten oder zum Verdunsten von flüchtigen Bestandteilen wie Lösemittel, Wasser oder Kohlendioxid, wenn das erfindungsgemäße Dual-Cure-Stoffgemisch mit überkritischem Kohlendioxid als Lösemittel appliziert worden ist. Die Ruhezeit kann durch die Anwendung erhöhter Temperaturen bis 80 °Celsius unterstützt und/oder verkürzt werden, sofern hierbei keine Schädigungen oder Veränderungen der applizierten Schichten eintreten, etwa eine vorzeitige vollständige Vernetzung.

Erfindungsgemäß erfolgt die Aushärtung mit aktinischer Strahlung, insbesondere mit UV-Strahlung, und/oder Elektronenstrahlen. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der applizierten Schichten gewährleistet werden.

Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder -niederdruckdampflampen, welche gegebenenfalls mit Blei dotiert sind, um ein Strahlenfenster bis zu 405 nm zu öffnen, oder Eiektronenstrahlquellen. Deren Anordnung ist im Prinzip bekannt und kann den Gegebenheiten des Werkstücks und der Verfahrensparameter angepaßt werden. Bei kompliziert geformten Werkstücken wie Automobilkarosserien können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern, verbunden mit einer automatischen Bewegungseinrichtung für das Bestrahlen von Hohlräumen oder Kanten, ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Auch die thermische Härtung weist keine methodischen Besonderheiten auf, sondern erfolgt nach den üblichen und bekannten Methoden wie Erhitzen in einem Umluftofen oder Bestrahlen mit IR-Lampen. Wie bei der Härtung mit aktinischer Strahlung kann auch die thermische Härtung stufenweise erfolgen. Vorteilhafterweise erfolgt die thermische Härtung bei einer Temperatur >90 °C, bevorzugt 90 bis 180 °C, besonders bevorzugt 110 bis 160°C und insbesondere 120 bis 150 °C während einer Zeit von 1 min bis zu 2 h, besonders bevorzugt 2 min bis zu 1 h und insbesondere 3 min bis 30 min.

Thermische Härtung und Härtung mit aktinischer Strahlung können gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist aufgrund seines allgemeinen Fachwissens gegebenenfalls unter Zuhilfenahme einfacher Vorversuche ermitteln.

Die aus den erfindungsgemäßen Dual-Cure-Klebstoffen und -Dichtungsmassen hergestellten erfindungsgemäßen Klebschichten und Dichtungen haben auch unter extremen klimatischen Bedingungen eine hervorragende Klebkraft und Dichtungsfähigkeit auch über lange Zeiträume hinweg.

Die aus den erfindungsgemäßen Dual-Cure-Beschichtungsstoffen hergestellten erfindungsgemäßen Beschichtungen weisen einen hervorragenden Verlauf und einen hervorragenden optischen Gesamteindruck auf. Sie sind witterungsstabil und vergilben auch im tropischen Klima nicht. Sie sind daher im Innen- und Außenbereich verwendbar.

Daher weisen auch die erfindungsgemäßen grundierten und ungrundiertne Substrate, insbesondere Karosserien von Automobilen und Nutzfahrzeugen, industrielle Bauteile, inklusive Kunstsstoffteile, Emballagen, Coils und elektrische Bauteile, oder Möbel, die mit mindestens einer erfindungsgemäßen Beschichtung beschichtet, mindestens einer erfindungsgemäßen Dichtung abgedichtet und/oder mit mindestens einem erfindungsgemäßen Klebstoff verklebt sind, besondere technische und wirtschaftliche Vorteile, insbesondere eine lange Gebrauchsdauer auf, was sie für die Anwender besonders attraktiv macht.

## Patentansprüche

1. Thermisch und mit aktinischer Strahlung härtbares Stoffgemisch (Dual-Cure-Stoffgemisch), enthaltend
A) mindestens einen Bestandteil, der pro Molekül im statistischen Mittel mindestens eine primäre oder sekundäre Carbamatgruppe und mindestens eine mit aktinischer Strahlung aktivierbare Bindung aufweist und herstellbar ist, indem man
1. nach einer ersten Variante
1.1 in einem ersten Verfahrenschritt mindestens eine polyfunktionelle Verbindung mit mindestens zwei isocyanatreaktiven, säurereaktiven oder epoxidreaktiven funktionellen Gruppen mit jeweils mindestens einer Verbindung umsetzt, die eine Isocyanatgruppe, Säuregruppe oder Epoxidgruppen sowie mindestens eine mit aktinischer Strahlung aktivierbare Bindung aufweist, wonach man in einem zweiten Verfahrenschritt das resultierende Zwischenprodukt, das im statistischen Mittel noch mindestens eine freie isocyanatreaktive, säurereaktive oder epoxidreaktive funktionelle Gruppe aufweist, mit jeweils mindestens einer Verbindung umsetzt, durch die Carbamatgruppen eingeführt werden; oder
1.2 in einem ersten Verfahrenschritt mindestens eine polyfunktionelle Verbindung mit mindestens zwei isocyanatreaktiven, säurereaktiven oder epoxidreaktiven funktionellen Gruppen mit jeweils mindestens einer Verbindung umsetzt, durch die Carbamatgruppen eingeführt werden, wonach man in einem zweiten Verfahrenschritt das resultierende Zwischenprodukt, das im statistischen Mittel noch mindestens eine freie isocyanatreaktive, säurereaktive oder epoxidreaktive funktionelle Gruppe aufweist, mit jeweils mindestens einer Verbindung umsetzt, die eine Isocyanatgruppe, Säuregruppe oder Epoxidgruppen sowie mindestens eine mit aktinischer Strahlung aktivierbare Bindung aufweist;
2. nach einer zweiten Variante
2.1 in einem ersten Verfahrenschritt mindestens ein Polyisocyanat, eine Polysäure oder ein Polyepoxid mit jeweils mindestens einer Verbindung, die mindestens eine mit aktinischer Strahlung aktivierbare Bindung sowie eine isocyanatreaktive, säurereaktive oder epoxidreaktive funktionelle Gruppe aufweist, umsetzt, wonach man das resultierende Zwischenpodukt, das im statistischen Mittel noch mindestens eine Isocyanatgruppe, Säuregruppe oder Epoxidgruppe aufweist, in einem zweiten Verfahrensschritt mit jeweils mindestens einer Verbindung, die mindestens eine Carbamatgruppe oder mindestens eine in Carbamatgruppen umwandelbare funktionelle Gruppe sowie eine isocyanatreaktive, säurereaktive oder epoxidreaktive funktionelle Gruppe aufweist, umsetzt; oder
2.2 in einem ersten Verfahrenschritt mindestens ein Polyisocyanat, eine Polysäure oder ein Polyepoxid mit jeweils mindestens einer Verbindung, die mindestens eine Carbamatgruppe oder mindestens eine in Carbämatgruppen umwandelbare funktionelle Gruppe sowie eine isocyanatreaktive, säurereaktive oder epoxidreaktive funktionelle Gruppe aufweist, umsetzt, wonach man das resultierende Zwischenpodukt, das im statistischen Mittel noch mindestens eine Isocyanatgruppe, Säuregruppe oder Epoxidgruppe aufweist, in einem zweiten Verfahrensschritt mit jeweils mindestens einer Verbindung, die mindestens eine mit aktinischer Strahlung aktivierbare Bindung sowie eine isocyanatreaktive, säurereaktive oder epoxidreaktive funktionelle Gruppe aufweist, umsetzt; oder
3. nach einer dritten Variante mindestens ein Polyisocyanat, eine Polysäure oder ein Polyepoxid in einem Eintopfverfahren mit mindestens einer Verbindung, die mindestens eine Carbamatgruppe oder mindestens eine in Carbamatgruppen umwandelbare funktionelle Gruppen sowie eine isocyanatreaktive, säurereaktive oder epoxidreaktive funktionelle Gruppe aufweist, und mindestens einer Verbindung, die mindestens eine mit aktinischer Strahlung aktivierbare Bindung sowie eine isocyanatreaktive, säurereaktive oder epoxidreaktive funktionelle Gruppe aufweist, umsetzt; und
B) mindestens einen Bestandteil, der pro Molekül im statistischen Mittel mindestens eine carbamatreaktive funktionelle Gruppe sowie gegebenenfalls mindestens eine mit aktinischer Strahlung aktivierbare Bindung aufweist.

2. Dual-Cure-Stoffgemisch nach Anspruch 1, **dadurch gekennzeichnet, daß** bei den Varianten 1 bis 3 die Molverhältnisse der Reaktionspartner so gewählt werden, daß der jeweils resultierende Bestandteil (A) keine Isocyanat-, Säure- oder Epoxidgruppen mehr enthält.

3. Dual-Cure-Stoffgemisch nach Anspruch 1, **dadurch gekennzeichnet, daß** bei den Varianten 1 bis 3 die Molverhältnisse der Reaktionspartner so gewählt werden, daß der jeweils resultierende Bestandteil (A) noch mindestens eine isocyanatreaktive, säurereaktive oder epoxidreaktive funktionelle Gruppe (Variante 1) oder mindestens eine Isocyanat-, Säure- oder Epoxidgruppe (Varianten 2 und 3) enthält, die mit mindestes einer Verbindung umgesetzt wird, die eine eine Isocyanat-, Säure- oder Epoxidgruppe (Variante 1) oder eine isocyanatreaktive, säurereaktive oder epoxidreaktive funktionelle Gruppe (Varianten 2 und 3) und mindestens eine von Carbamatgruppen, von in Carbamatgruppen umwandelbare Gruppen und von mit aktinischer Strahlung aktivierbaren Bindungen verschiedene funktionelle Gruppe (Varianten 1 bis 3) enthält.

4. Dual-Cure-Stoffgemisch nach einem der Ansprüche 1 bis 3, **dadurch gekennzeichnet, daß** es sich
(i) bei den Bestandteilen (A) um oligomere und/oder polymere Verbindungen und bei den Bestandteilen (B) um niedermolekulare und/oder oligomere Verbindungen oder
(ii) bei den Bestandteilen (A) um niedermolekulare und/oder oligomere Verbindungen und bei den Bestandteilen (B) um oligomere und/oder polymere Verbindungen oder
(iii) bei den Bestandteilen (A) um niedermolekulare und/oder oligomere Verbindungen und bei den Bestandteilen (B) um niedermolekulare und/oder oligomere Verbindungen oder
(iv) bei den Bestandteilen (A) und bei den Bestandteilen (B) um oligomere und/oder polymere Verbindungen
handelt.

5. Dual-Cure-Stoffgemisch nach einem der Ansprüche 1 bis 4, **dadurch gekennzeichnet, daß** der Bestandteil (A) primäre Carbamatgruppen enthält.

6. Dual-Cure-Stoffgemisch nach einem der Ansprüche 1 bis 5, **dadurch gekennzeichnet**, das als mit aktinischer Strahlung aktivierbare Bindungen Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen verwendet werden.

7. Dual-Cure-Stoffgemisch nach einem der Ansprüche 1 bis 6, **dadurch gekennzeichnet, daß** die Doppelbindungen als (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vorliegen.

8. Dual-Cure-Stoffgemisch nach einem der Ansprüche 1 bis 7, **dadurch gekennzeichnet, daß** es sich bei den isocyanatreaktiven funktionellen Gruppen um Thiol-, primäre oder sekundäre Amino-, Imino- oder Hydroxylgruppen, bei den säurereaktiven funktionellen Gruppen um die vorstehend genannten Gruppen sowie Epoxidgruppen und bei den epoxidreaktiven funktionellen Gruppen um Säuregruppen, insbesondere Carboxylgruppen, oder primäre, sekundäre und tertiäre Aminogruppen handelt.

9. Dual-Cure-Stoffgemisch nach einem der Ansprüche 1 bis 8, **dadurch kennzeichnet, daß** als carbamatreaktive funktionelle Gruppen N-Methylol- und/oder N-Methylolethergruppen verwendet werden.

10. Dual-Cure-Stoffgemischnach einem der Ansprüche 1 bis 9, **dadurch gekennzeichnet, daß** es mindestens einen Zusatzstoff (C) enthält.

11. Klebstoffe, Dichtungsmassen und Beschichtungsstoffe, die ein Dual-Cure-Stoffgemisch gemäß einem der Ansprüche 1 bis 10 enthalten oder hieraus bestehen.

12. Verwendung der Klebstoffe, Dichtungsmassen und Beschichtungsstoffe gemäß Anspruch 11 zur Herstellung von Klebschichten, Dichtungen und Beschichtungen, insbesondere ein- und mehrschichtiger Klarlackierungen oder farb- und/oder effektgebender Lackierungen.

13. Verwendung nach Anspruch 12, **dadurch gekennzeichnet, daß** die Klebstoffe, Dichtungsmassen und Beschichtungsstoffe in der Automobilerstlackierung, der Autoreparaturlackierung, der Möbellackierung und in der industriellen Lackierung, inklusive Coil Coating, Container Coating und die Beschichtungen elektrotechnischer Bauteile, angewandt werden.

14. Klebschichten, Dichtungen und/oder Beschichtungen auf grundierten und ungrundierten Substraten, herstellbar durch Applikation mindestens eines Klebstoffs, mindestens einer Dichtungsmasse und/oder mindestens eines Beschichtungsstoffs auf die Substrate sowie thermische Härtung und Härtung mit aktinischer Strahlung der resultierenden Schicht oder Schichten, **dadurch gekennzeichnet, daß** man hierbei mindestens einen Klebstoff, mindestens eine Dichtungsmasse und/oder mindestens einen Beschichtungsstoff gemäß Anspruch 9 anwendet.

## Claims

1. Composition curable thermally and with actinic radiation (dual-cure composition), comprising
A) at least one constituent containing on average per molecule at least one primary or secondary carbamate group and at least one bond which can be activated with actinic radiation, which constituent is preparable by
1. in accordance with a first variant
1.1 in a first process step, reacting at least one polyfunctional compound containing at least two isocyanate-reactive, acid-reactive or epoxide-reactive functional groups with in each case at least one compound containing an isocyanate group, acid group or epoxide groups and also at least one bond which can be activated with actinic radiation, and subsequently, in a second process step, reacting the resultant intermediate, which on average still contains at least one free isocyanate-reactive, acid-reactive or epoxide-reactive functional group, with in each case at least one compound by means of which carbamate groups are introduced; or
1.2 in a first process step, reacting at least one polyfunctional compound containing at least two isocyanate-reactive, acid-reactive or epoxide-reactive functional groups with in each case at least one compound by means of which carbamate groups are introduced, and subsequently, in a second process step, reacting the resultant intermediate, which on average still contains at least one free isocyanate-reactive, acid-reactive or epoxide-reactive functional group, with in each case at least one compound containing an isocyanate group, acid group or epoxide groups and also at least one bond which can be activated with actinic radiation;
2. in accordance with a second variant
2.1 in a first process step, reacting at least one polyisocyanate, polyacid or polyepoxide with in each case at least one compound containing at least one bond which can be activated with actinic radiation and also one isocyanate-reactive, acid-reactive or epoxide-reactive functional group, and subsequently reacting the resultant intermediate, which on average still contains at least one isocyanate group, acid group or epoxide group, in a second process step with in each case at least one compound containing at least one carbamate group or at least one functional group which can be converted into carbamate groups, and also containing an isocyanate-reactive, acid-reactive or epoxide-reactive functional group; or
2.2 in a first process step, reacting at least one polyisocyanate, polyacid or polyepoxide with in each case at least one compound containing at least one carbamate group or at least one functional group which can be converted into carbamate groups, and also an isocyanate-reactive, acid-reactive or epoxide-reactive functional group, and subsequently reacting the resultant intermediate, which on average still contains at least one isocyanate group, acid group or epoxide group, in a second process step with in each case at least one compound containing at least one bond which can be activated with actinic radiation and also one isocyanate-reactive, acid-reactive or epoxide-reactive functional group; or
3. in accordance with a third variant, reacting at least one polyisocyanate, polyacid or polyepoxide in a one-pot process with at least one compound containing at least one carbamate group or at least one functional group which can be converted into carbamate groups, and also one isocyanate-reactive, acid-reactive or epoxide-reactive functional group, and at least one compound containing at least one bond which can be activated with actinic radiation and also one isocyanate-reactive, acid-reactive or epoxide-reactive functional group; and
B) at least one constituent containing on average per molecule at least one carbamate-reactive functional group and also, if desired, at least one bond which can be activated with actinic radiation.

2. Dual-cure composition according to Claim 1, **characterized in that** in the case of variants 1 to 3 the molar ratios of the reactants are chosen so that the respective resulting constituent (A) no longer contains any isocyanate, acid or epoxide groups.

3. Dual-cure composition according to Claim 1, **characterized in that** in the case of variants 1 to 3 the molar ratios of the reactants are chosen such that the respective resulting constituent (A) still contains at least one isocyanate-reactive, acid-reactive or epoxide-reactive functional group (variant 1) or at least one isocyanate, acid or epoxide group (variants 2 and 3) which is reacted with at least one compound which contains an isocyanate, acid or epoxide group (variant 1) or an isocyanate-reactive, acid-reactive or epoxide-reactive functional group (variants 2 and 3) and also at least one functional group which is different than carbamate groups, than groups which can be converted into carbamate groups and than bonds which can be activated with actinic radiation (variants 1 to 3).

4. Dual-cure composition according to one of Claims 1 to 3, **characterized in that**
(i) the constituents (A) are oligomeric and/or polymeric compounds and the constituents (B) are low molecular and/or oligomeric compounds, or
(ii) the constituents (A) are low molecular and/or oligomeric compounds and the constituents (B) are oligomeric and/or polymeric compounds, or
(iii) the constituents (A) are low molecular and/or oligomeric compounds and the constituents (B) are low molecular and/or oligomeric compounds, or
(iv) the constituents (A) and the constituents (B) are oligomeric and/or polymeric compounds.

5. Dual-cure composition according to one of Claims 1 to 4, **characterized in that** the constituent (A) contains primary carbamate groups.

6. Dual-cure composition according to one of Claims 1 to 5, **characterized in that** carbon-hydrogen single bonds or carbon-carbon, carbon-oxygen, carbon-nitrogen, carbon-phosphorus or carbon-silicon single bonds or double bonds are used as bonds which can be activated with actinic radiation.

7. Dual-cure composition according to one of Claims 1 to 6, **characterized in that** the double bonds are present in the form of (meth) acrylate, ethacrylate, crotonate, cinnamate, vinyl ether, vinyl ester, ethenylarylene, dicyclopentadienyl, norbornenyl, isoprenyl, isopropenyl, allyl or butenyl groups; ethenylarylene ether, dicyclopentadienyl ether, norbornenyl ether, isoprenyl ether, isopropenyl ether, allyl ether or butenyl ether groups, or ethenylarylene ester, dicyclopentadienyl ester, norbornenyl ester, isoprenyl ester, isopropenyl ester, allyl ester or butenyl ester groups.

8. Dual-cure composition according to one of Claims 1 to 7, **characterized in that** the isocyanate-reactive functional groups are thiol, primary or secondary amino, imino or hydroxyl groups, the acid-reactive functional groups are the abovementioned groups and also epoxide groups, and the epoxide-reactive functional groups are acid groups, especially carboxyl groups, or primary, secondary and tertiary amino groups.

9. Dual-cure composition according to one of Claims 1 to 8, **characterized in that** N-methylol and/or N-methylol ether groups are used as carbamate-reactive functional groups.

10. Dual-cure composition according to one of Claims 1 to 9, **characterized in that** it comprises at least one additive (C).

11. Adhesives, sealing compounds and coating materials which consist of or comprise a dual-cure composition according to one of Claims 1 to 10.

12. Use of the adhesives, sealing compounds and coating materials according to Claim 11 for producing adhesive films, seals and coatings especially single-coat and multicoat clearcoat systems or colour and/or effect paint systems.

13. Use according to Claim 12, **characterized in that** the adhesives, sealing compounds and coating materials are employed in automotive OEM finishing, automotive refinish, furniture coating and industrial coating, including coil coating, container coating and the coatings of electrical components.

14. Adhesive films, seals and/or coatings on primed and unprimed substrates, producible by applying at least one adhesive, at least one sealing compound and/or at least one coating material to the substrates and curing the resultant film or films thermally and with actinic radiation, **characterized in that** at least one adhesive, at least one sealing compound and/or at least one coating material according to Claim 9 is employed here.

## Revendications

1. Mélange de substances durcissable thermiquement et par un rayonnement actinique [mélange de substances Dual-Cure (à double durcissement)], contenant
(A) au moins un composant qui comporte en moyenne statistique par molécule au moins un groupe carbamate primaire ou secondaire et au moins une liaison activable par un rayonnement actinique et peut être préparé par le fait que
1. selon une première variante
1.1 dans une première étape de processus on fait réagir au moins un composé polyfonctionnel comportant au moins deux groupes fonctionnels réactifs avec des isocyanates, réactifs avec des acides ou réactifs avec des époxydes, avec respectivement au moins un composé qui comporte un groupe isocyanate, un groupe acide ou des groupes époxy ainsi qu'au moins une liaison activable par un rayonnement actinique, à la suite de quoi, dans une seconde étape de processus on fait réagir le produit intermédiaire résultant, qui comporte en moyenne statistique encore au moins un groupe fonctionnel libre réactif avec un isocyanate, réactif avec un acide ou réactif avec un époxyde, avec respectivement au moins un composé par lequel sont introduits des groupes carbamate ; ou
1.2 dans une première étape de processus on fait réagir au moins un composé polyfonctionnel comportant au moins deux groupes fonctionnels réactifs avec des isocyanates, réactifs avec des acides ou réactifs avec des époxydes, avec respectivement au moins un composé par lequel sont introduits des groupes carbamate, à la suite de quoi, dans une seconde étape de processus on fait réagir le produit intermédiaire résultant, qui comporte en moyenne statistique encore au moins un groupe fonctionnel libre réactif avec un isocyanate, réactif avec un acide ou réactif avec un époxyde, avec respectivement au moins un composé qui comporte un groupe isocyanate, un groupe acide ou un groupe époxy ainsi qu'au moins une liaison activable par un rayonnement actinique ;
2. selon une deuxième variante
2.1 dans une première étape de processus on fait réagir au moins un polyisocyanate, un polyacide ou un polyépoxyde avec respectivement au moins un composé qui comporte au moins une liaison activable par un rayonnement actinique ainsi qu'un groupe fonctionnel réactif avec un isocyanate, réactif avec un acide ou réactif avec un époxyde, à la suite de quoi on fait réagir le produit intermédiaire résultant, qui comporte en moyenne statistique encore au moins un groupe isocyanate, un groupe acide ou un groupe époxy, dans une seconde étape de processus, avec respectivement au moins un composé qui comporte au moins un groupe carbamate ou au moins un groupe fonctionnel pouvant être converti en groupes carbamate ainsi qu'un groupe fonctionnel réactif avec un isocyanate, réactif avec un acide ou réactif avec un époxyde ; ou
2.2 dans une première étape de processus on fait réagir au moins un polyisocyanate, un polyacide ou un polyépoxyde avec respectivement au moins un composé qui comporte au moins un groupe carbamate ou au moins un groupe fonctionnel pouvant être converti en groupes carbamate ainsi qu'un groupe fonctionnel réactif avec un isocyanate, réactif avec un acide ou réactif avec un époxyde, à la suite de quoi on fait réagir le produit intermédiaire résultant, qui comporte en moyenne statistique encore au moins un groupe isocyanate, un groupe acide ou un groupe époxy, dans une seconde étape de processus, avec respectivement au moins un composé qui comporte au moins une liaison activable par un rayonnement actinique ainsi qu'un groupe fonctionnel réactif avec un isocyanate, réactif avec un acide ou réactif avec un époxyde ; ou
3. selon une troisième variante on fait réagir au moins un polyisocyanate, un polyacide ou un polyépoxyde, dans un procédé en un seul récipient, avec au moins un composé qui comporte au moins un groupe carbamate ou au moins un groupe fonctionnel pouvant être converti en groupes carbamate ainsi qu'un groupe fonctionnel réactif avec un isocyanate, réactif avec un acide ou réactif avec un époxyde, et au moins un composé qui comporte au moins une liaison activable par un rayonnement actinique ainsi qu'un groupe fonctionnel réactif avec un isocyanate, réactif avec un acide ou réactif avec un époxyde ; et
B) au moins un composant qui comporte en moyenne statistique par molécule au moins un groupe fonctionnel réactif avec un carbamate ainsi qu'éventuellement au moins une liaison activable par un rayonnement actinique.

2. Mélange de substances Dual-Cure selon la revendication 1, **caractérisé en ce que** dans les variantes 1 à 3 les rapports molaires des partenaires réactionnels sont choisis de manière que le composant (A) résultant chaque fois ne contienne plus aucun groupe isocyanate, acide ou époxy.

3. Mélange de substances Dual-Cure selon la revendication 1, **caractérisé en ce que** dans les variantes 1 à 3 les rapports molaires des partenaires réactionnels sont choisis de manière que le composant (A) résultant chaque fois contienne encore au moins un groupe fonctionnel réactif avec un isocyanate, réactif avec un acide ou réactif avec un époxyde (variante 1) ou au moins un groupe isocyanate, acide ou époxy (variantes 2 et 3), qui est mis en réaction avec au moins un composé qui contient un groupe isocyanate, acide ou époxy (variante 1) ou un groupe fonctionnel réactif avec un isocyanate, réactif avec un acide ou réactif avec un époxyde (variantes 2 et 3) et au moins un groupe fonctionnel différent de groupes carbamate, de groupes pouvant être convertis en groupes carbamate et de liaisons activables par un rayonnement actinique (variantes 1 à 3).

4. Mélange de substances Dual-Cure selon l'une quelconque des revendications 1 à 3, **caractérisé en ce qu'**il s'agit
(i) quant aux composants (A), de composés oligomères et/ou polymères et quant aux composants (B), de composés de faible masse moléculaire et/ou oligomères ou
(ii) quant aux composants (A), de composés de faible masse moléculaire et/ou oligomères et quant aux composants (B), de composés oligomères et/ou polymères ou
(iii) quant aux composants (A), de composés de faible masse moléculaire et/ou oligomères et quant aux composants. (B), de composés de faible masse moléculaire et/ou oligomères ou
(iv) quant aux composants (A) et quant aux composants (B), de composés oligomères et/ou polymères.

5. Mélange de substances Dual-Cure selon l'une quelconque des revendications 1 à 4, **caractérisé en ce que** le composant (A) contient des groupes carbamate primaires.

6. Mélange de substances Dual-Cure selon l'une quelconque des revendications 1 à 5, **caractérisé en ce qu'**on utilise en tant que liaisons activables par un rayonnement actinique des liaisons simples carbone-hydrogéne ou des liaisons simples ou doubles liaisons carbone-carbone, carbone-oxygène, carbone-azote, carbone-phosphore ou carbone-silicium.

7. Mélange de substances Dual-Cure selon l'une quelconque des revendications 1 à 6, **caractérisé en ce que** les doubles liaisons se trouvent sous forme de groupes (méth)acrylate, éthacrylate, crotonate, cinnamate, éther vinylique, ester vinylique, éthénylarylène, dicyclopentadiényle, norbornényle, isoprényle, isopropényle, allyle ou butényle ; de groupes éther éthénylarylénique, dicyclopentadiénylique, norbornénylique, isoprénylique, isopropénylique, allylique ou buténylique ou de groupes ester éthénylarylénique, dicyclopentadiénylique, norbornénylique, isoprénylique, isopropénylique, allylique ou buténylique.

8. Mélange de substances Dual-Cure selon l'une quelconque des revendications 1 à 7, **caractérisé en ce que** des groupes fonctionnels réactifs avec des isocyanates sont des groupes thiol, des groupes primaires et secondaires amino, imino et hydroxy, les groupes fonctionnels réactifs avec des acides consistent en les groupes cités précédemment ainsi qu'en des groupes époxy et les groupes fonctionnels réactifs avec des époxydes sont des groupes acides, en particulier de groupes carboxy, ou des groupes amino primaires, secondaires et tertiaires.

9. Mélange de substances Dual-Cure selon l'une quelconque des revendications 1 à 8, **caractérisé en ce qu'**en tant que groupes fonctionnels réactifs avec des carbamates, on utilise des groupes N-méthylol et/ou N-méthyloéther.

10. Mélange de substances Dual-Cure selon l'une quelconque des revendications 1 à 9, **caractérisé en ce qu'**il contient au moins un additif (C).

11. Adhésifs, matériaux d'étanchéité et matières de revêtement qui contiennent un mélange de substances Dual-Cure selon l'une quelconque des revendications 1 à 10 ou consistent en celui-ci.

12. Utilisation des adhésifs, matériaux d'étanchéité et matières de revêtement selon la revendication 11, pour la production de couches adhésives, d'étanchéités et de revêtements, en particulier de revêtements de peinture mono- et multicouches ou de revêtements de peinture colorants et/ou à effet.

13. Utilisation selon la revendication 12, **caractérisée en ce que** les adhésifs, matériaux d'étanchéité et matières de revêtement sont utilisés dans la première mise en peinture d'automobiles, le peinturage de réparation d'automobiles, le peinturage de meubles et le peinturage industriel, y compris le peinturage de rubans en continu *(coil coating),* le peinturage de récipients *(container coating)* et les revêtements de composants électrotechniques.

14. Couches adhésives, étanchéités et/ou revêtements sur des subjectiles revêtus ou non d'un primaire, pouvant être produits par application d'au moins un adhésif, d'au moins un matériau d'étanchéité et/ou d'au moins une matière de revêtement sur les subjectiles, ainsi que durcissement thermique et durcissement par un rayonnement actinique de la couche résultante ou des couches résultantes, **caractérisés en ce qu'**on utilise à cet effet au moins un adhésif, au moins un matériau d'étanchéité et/ou au moins une matière de revêtement selon la revendication 9.
